(19) Europäisches Patentamt
European Patent Office
Office européen des brevets

(11) EP 4 069 775 B1

(12) EUROPEAN PATENT SPECIFICATION

(45) Date of publication and mention of the grant of the patent:
**03.04.2024 Bulletin 2024/14**

(21) Application number: **20815845.1**

(22) Date of filing: **02.12.2020**

(51) International Patent Classification (IPC):
***C08L 23/08*** *(2006.01)* ***D01F 6/30*** *(2006.01)*
***D01F 6/46*** *(2006.01)*

(52) Cooperative Patent Classification (CPC):
(C-Sets available)
**D01F 6/46; C08L 23/0815; D01F 6/30;**
C08L 2201/08; C08L 2203/12; C08L 2205/025;
C08L 2205/035 (Cont.)

(86) International application number:
**PCT/EP2020/084319**

(87) International publication number:
**WO 2021/110769 (10.06.2021 Gazette 2021/23)**

(54) **POLYETHYLENE COMPOSITION FOR FILAMENTS OR FIBERS**

POLYETHYLENZUSAMMENSETZUNG FÜR FILAMENTE ODER FASERN

COMPOSITION DE POLYÉTHYLÈNE POUR FILAMENTS OU FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2019 EP 19213059**

(43) Date of publication of application:
**12.10.2022 Bulletin 2022/41**

(73) Proprietor: **Basell Polyolefine GmbH**
**50389 Wesseling (DE)**

(72) Inventors:
- **PERDOMI, Gianni**
  **44122 Ferrara (IT)**
- **GALVAN, Monica**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2009/101124 WO-A1-2019/007684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 069 775 B1

(52) Cooperative Patent Classification (CPC): (Cont.)

C-Sets
**C08L 23/0815, C08L 23/16, C08L 23/0815, C08L 23/12**

## Description

FIELD OF THE INVENTION

The present disclosure concerns a polyethylene composition for filaments, in particular filaments for producing artificial turf, or fibers.

BACKGROUND OF THE INVENTION

The term "filaments" is generally used to make a distinction with respect to the fibers for textile and carpeting applications. In fact it is known, as explained for example in WO2005005730, that strands with heavy denier, often called "filaments", are required to prepare artificial turf structures. Thus the present filaments also called, for the said reasons, "artificial turf filaments", are preferably characterized by a titre of at least 20 denier (hereinafter called "den").

To produce the final artificial turf structure, the filaments are normally fixed to a backing substrate.

The so obtained artificial turf is primarily used to substitute natural grass, in particular in sport fields.

As explained in WO2009101124, for such applications as well as for other applications of artificial turf filaments, important and highly desirable properties are resistance to mechanical stress and wear, softness and UV resistance. In particular, high values of softness and UV resistance are generally achieved by using polyethylene materials as polyolefin component of the filament or fiber.

The polyethylene materials described in the above said document are produced by using metallocene catalysts in polymerization, and achieve valuable properties in terms of tenacity and elongation at break. In particular the highest values of elongation at break are of about 145-155%, as reported in the examples.

According to WO2011 134897 polymer filaments or fibers having very high values of elongation at break, stress at break and tear resistance, in combination with other valuable properties, such as a low residual deformation and relatively low tangent modulus, are obtained from a specific class of ethylene polymers having the following features:

a) a density of 0.900 g/cm$^3$ or higher;
b) a $MI_{21}$ value of 25 g/10 min. or greater;
c) a MFR value from 25 to 60.

Said ethylene polymers can be optionally mixed with an elastomeric or plastomeric polyolefin or polyolefin composition.

It has now been found that filaments or fibers having very high values of tenacity, elongation at break and elastic recovery are obtained by using, as polyethylene component, a blend of a specific class of ethylene polymers with a polyolefin composition comprising polypropylene and two ethylene polymers with different composition.

The said properties are clearly desirable also for low titre fibers, for instance for textile applications, and is achieved to the maximum extent when the filaments and fibers are oriented by stretching.

SUMMARY OF THE INVENTION

Thus the present disclosure provides a polyethylene composition, hereinafter called "polyethylene composition (I)", comprising:

A) from 75% to 97% by weight, preferably from 78% to 95% by weight, more preferably from 85% to 95% by weight, of a copolymer of ethylene with one or more comonomers selected from $C_3$-$C_{10}$ alpha-olefins, said ethylene copolymer having the following features:

1) a density of 0.925 g/cm$^3$ or higher, preferably 0.930 g/cm$^3$ or higher, in particular from 0.925 to 0.945 g/cm$^3$ or preferably from 0.930 to 0.945 g/cm$^3$, measured according to ISO 1183-1:2012 at 23°C;
2) a $MI_2$ value of 0.5 g/10 min. or greater, preferably of 1 g/10 min. or greater, more preferably of 1.5 g/10 min. or greater, where $MI_2$ is the Melt Index measured according to ISO 1133-2:2011 at 190°C with a load of 2.16 kg;

B) from 3% to 25% by weight, preferably from 5% to 22% by weight, more preferably from 5% to 15% by weight, of a polyolefin composition comprising:

$B^I$) from 5% to 35% by weight of one or more propylene homopolymer(s) or one or more copolymer(s) of propylene with ethylene and/or $C_4$-$C_8$ $\alpha$-olefin(s), containing 90% or more of propylene units, or combinations of said homopolymers and copolymers; component $B^I$) containing 10.0% by weight or less, in particular from

1% to 10% by weight, of a fraction soluble in xylene at 25°C ($XS^I$), both the amount of propylene units and of the fraction $XS^I$ being referred to the weight of $B^I$);
$B^{II}$) from 20% to 50% by weight of a copolymer of ethylene and one or more comonomers selected from $C_3$-$C_{10}$ alpha-olefins, containing from 1.0% to 20.0% by weight of alpha-olefin units and containing 25.0%, by weight or less, in particular from 0.5% to 25% by weight, of a fraction soluble in xylene at 25°C ($XS^{II}$), both the amount of alpha-olefin units and of the fraction $XS^{II}$ being referred to the weight of $B^{II}$); and
$B^{III}$) from 30% to 60% by weight of a copolymer of ethylene and propylene containing from 25.0% to 75.0 % by weight of ethylene derived units and containing from 40.0% to 95.0% by weight of a fraction soluble in xylene at 25°C ($XS^{III}$), both the amount of ethylene units and of the fraction $XS^{III}$ being referred to the weight of $B^{III}$);

the said amounts of A) and B) being referred to the total weight of A) + B) and the said amounts of $B^I$), $B^{II}$) and $B^{III}$) being referred to the total weight of $B^I$) + $B^{II}$) + $B^{III}$).

The present disclosure provides also a filament or fiber comprising the above described polyethylene composition (I).

As other polyolefin components and/or components different from polyolefins can be present in the filament or fiber, it is to be understood that the present polyethylene composition (I) can constitute the overall polymer composition present in the filament or fiber, or be part of such polymer composition, and the total weight of the filament or fiber can be the sum of the said polyethylene composition (I) and of other components.

## DETAILED DESCRIPTION OF THE INVENTION

The term "copolymer" as used herein includes polymers containing one kind or more than one kind of comonomers.

All the alpha-olefins herein reported as comonomers are selected from olefins having formula $CH_2$=CHR wherein R is an alkyl radical, linear or branched, or an aryl radical, having the appropriate number of carbon atoms; thus, for instance, from 1 to 8 carbon atoms for $C_3$-$C_{10}$ alpha-olefins, and from 2 to 6 carbon atoms for $C_4$-$C_8$ alpha-olefins.

Specific examples of $C_3$-$C_{10}$ alpha-olefins are propylene, butene-1, pentene-1, 4-methylpentene-1, hexene-1, octene-1 and decene-1.

As alpha-olefin comonomers which can be present, either individually or in a mixture with one another, in addition to ethylene in the copolymer component A), $C_5$-$C_{10}$ alpha-olefins are preferred.

Specific examples of preferred comonomers in the copolymer component A) are pentene-1, hexene-1 and octene-1. Particularly preferred is hexene-1.

The upper limit of $MI_2$ values for the copolymer component A) of the polyethylene composition (I) is preferably of 10 g/10 min., more preferably of 5 g/10 min.

Thus, specific ranges of $MI_2$ values are:

- from 0.5 to 10 g/10 min., or
- from 1 to 10 g/10 min., or
- from 1.5 to 10 g/10 min., or
- from 0.5 to 5 g/10 min., or
- from 1 to 5 g/10 min., or
- from 1.5 to 5 g/10 min.

Particularly preferred density values for the copolymer component A) are from 0.925 to 0.938 g/cm$^3$ or preferably from 0.930 to 0.938 g/cm$^3$.

Other preferred features for the copolymer component A) are (independently from each other, or in any combination):

- a Mw/Mn value from 4 to 18, preferably from 5 to 15, more preferably from 7 to 15, where Mw and Mn are the weight average molecular weight and the number average molecular weight respectively, measured by GPC (Gel Permeation Chromatography) as explained in detail in the examples;
- a Mw value of from 20000 g/mol to 500000 g/mol, more preferably from 50000 g/mol to 300000 g/mol and particularly preferably from 80000 g/mol to 250000 g/mol;
- a z-average molar mass Mz of less than 1 Mio. g/mol, more preferably from 200000 g/mol to 800000 g/mol, wherein Mz is the z-average molar mass measured by GPC as explained in detail in the examples;
- comonomer content, in particular hexene-1 content, of 8% by weight or lower, in particular from 8% to 3% by weight, with respect to the total weight of the copolymer;
- a $MI_{21}$ value of from 55 to 120 g/10min. or from 60 to 110 g/10 min., where $MI_{21}$ is the Melt Index measured according

to ISO 1133-2:2011 at 190°C with a load of 21.6 kg;

- a $MI_{21}/MI_2$ value from 25 to 60;
- a degree of long chain branching λ (lambda) of from 0 to 2 long chain branches/10000 carbon atoms and particularly preferably from 0.1 to 1.5 long chain branches/10000 carbon atoms;
- a content of vinyl groups of at least 0.6/1000 carbon atoms, in particular from 0.6 to 2 vinyl groups/1000 carbon atoms;
- a content of vinylidene groups of at least 0.05/1000 carbon atoms, in particular from 0.1 to 1 vinylidene groups/1000 carbon atoms.

The degree of long chain branching λ (lambda) is measured by light scattering as described, for example, in ACS Series 521, 1993, Chromatography of Polymers, Ed. Theodore Provder; Simon Pang and Alfred Rudin: Size-Exclusion Chromatographic Assessment of Long-Chain Branch Frequency in Polyethylenes, page 254-269.

The content of vinyl groups/1000 carbon atoms is determined by means of FT-IR in accordance with ASTM D 6248-98. For the present purposes, the expression vinyl groups refers to $-CH=CH_2$ groups; vinylidene groups and internal olefinic groups are not encompassed by this expression. Vinyl groups are usually attributed to a polymer termination reaction after an ethylene insertion, while vinylidene end groups are usually formed after a polymer termination reaction after a comonomer insertion.

The determination of the content of vinylidene groups/1000 carbon atoms is carried out in accordance with ASTM D 6248-98.

The molecular weight distribution of the copolymer component A) can be monomodal, bimodal or multimodal. In the present disclosure, a monomodal molecular weight distribution means that the molecular weight distribution, as determined with Gel Permeation Chromatography (GPC), has a single maximum. The molecular weight distribution curve of a GPC-multimodal polymer can be looked at as the superposition of the molecular weight distribution curves of two or more polymer subfractions or subtypes and will accordingly show two or more distinct maxima or will at least be distinctly broadened compared with the curves for the individual fractions. The molecular weight distribution of the copolymer component A) is preferably monomodal or bimodal, in particular monomodal.

The amount of the copolymer component A) with a molar mass of below 1 Mio. g/mol, as determined by GPC in the standard determination of the molecular weight distribution, is preferably above 95.5% by weight, more preferably above 96% by weight and particularly preferably above 97% by weight. This is determined in the usual course of the molar mass distribution measurement by applying the WIN GPC software of the company 'HS-Entwicklungsgesellschaft fur wissenschaftliche Hard-und Software mbH', flher-Hilbersheim/Germany, for instance.

The copolymer component A) of the polyolefin composition (I) is preferably produced by using a single site catalyst system. In particular, the single site catalyst system comprises a hafnocene catalyst component, preferably a hafnocene catalyst component and an iron complex having a tridentate ligand, preferably bearing at least two aryl radicals with each bearing a halogen or tert. alkyl substituent in the ortho-position.

Preferred examples of the said single site catalyst systems and of polymerization processes for preparing the copolymer component A) are disclosed in WO2009103516.

Hafnocene catalyst components are, for example, cyclopentadienyl complexes. The cyclopentadienyl complexes can be, for example, bridged or unbridged biscyclopentadienyl complexes as described, for example, in EP 129 368, EP 561 479, EP 545 304 and EP 576 970, monocyclopentadienyl complexes such as bridged amidocyclopentadienyl complexes described, for example, in EP 416 815, multinuclear cyclopentadienyl complexes as described in EP 632 063, pi-ligand-substituted tetrahydropentalenes as described in EP 659 758 or pi-ligand-substituted tetrahydroindenes as described in EP 661 300.

Preferred examples of hafnocene catalyst components are bis(cyclopentadienyl)hafnium dichloride, bis(indenyl)hafnium dichloride, bis(fluorenyl)hafnium dichloride, bis(tetrahydroindenyl)hafnium dichloride, bis(pentamethylcyclopentadienyl)hafnium dichloride, bis(trimethylsilylcyclopentadienyl)hafnium dichloride, bis(trimethoxysilylcyclopentadienyl)hafnium dichloride, bis(ethylcyclopentadienyl)hafnium dichloride, bis(isobutylcyclopenta-dienyl)hafnium dichloride, bis(3-butenylcyclopentadienyl)hafnium dichloride, bis(methylcyclopentadienyl)hafnium dichloride, bis(1,3-di-tert-butylcyclopentadienyl)hafnium dichloride, bis(trifluoromethylcyclopentadienyl)hafnium dichloride, bis(tert-butylcyclopentadienyl)hafhium dichloride, bis(n-butylcyclopentadienyl)hafnium dichloride, bis(phenylcyclopentadienyl)hafnium dichloride, bis(N,N-dimethylaminomethylcyclopentadienyl)hafnium dichloride, bis(1,3-dimethyleyclopentadienyl)hafnium dichloride, bis(1-n-buty1-3-methylcyclopentadienyt(hafnium dichloride, (cyclopentadienyl)(methylcyclopentadienyl)hafnium dichloride, (cyclopentadienyl)(n-butylcyclopentadienyl)hafnium dichloride, (methylcyclopentadienyl)(n-butylcyclopentadienyl)hafnium dichloride, (cyclopentadienyl)(1-methyl-3-n-butylcyclopentadienyl)hafnium dichloride, bis(tetramethylcyclopentadienyl)hafnium dichloride and also the corresponding dimethylhafnium compounds.

Particularly preferred is bis(n-butylcyclopentadienyl)hafnium dichloride.

Preferred iron complexes are 2,6-Bis[1-(4,6-Dimethyl-2-chloro-phenylimino) ethyl]pyridine iron(II) dichloride, 2,6-Bis]1-(2-tert.butylphenylimino)ethyl]pyridine iron(II) dichloride, 2,6-Bis]1-(2-tert.butyl-6-chlorophenylimino)ethyl]pyridine iron(II) dichloride, 2,6-Bisc[1-(2-chloro-6-methylphenylimino)ethyl]pyridine iron(II) dichloride, 2,6-Bis[1-(2,4-dichlorophenylimino)ethyl]pyridine iron(II) dichloride, 2,6-Bis[1-(2,6-dichlorophenylimino)ethyl]pyridine iron(II) dichloride, 2,6-Bis[1-(2,4-dichlorophenylimino)methyl]pyridine iron(II) dichloride, 2,6-Bis[1-(2,4-dichloro-6-methyl-phenylimino)ethyl]pyridine iron(II) dichloride, 2,6-Bis[1-(2,4-difluorophenylimino)ethyl]-pyridine iron(II) dichloride, 2,6-Bis[1-(2,4-dibromophenylimino)ethyl]pyridine iron(II) dichloride or the respective trichlorides, dibromides or tribromides.

The molar ratio of the hafnocene compound to the iron complex is usually in the range from 1:100 to 100:1, preferably from 1:10 to 10:1 and particularly preferably from 1:1 to 5: 1.

In addition to the said components, an activating compound, in particular an aluminoxane, is generally used. As aluminoxanes, it is possible to use, for example, the compounds described in WO00/31090.

A particularly useful aluminoxane compound is methylaluminoxane.

It has been found to be advantageous to use the hafnocene compound, the iron complex and the aluminoxane compounds in such amounts that the atomic ratio of aluminum from the aluminoxane compounds, including any aluminum alkyl still present, to the transition metal from the hafnocene compound, be in the range from 1:1 to 2000:1, preferably from 10:1 to 500:1 and in particular in the range from 20:1 to 400:1. The atomic ratio of aluminum from the aluminoxane compounds, including any aluminum alkyl still present, to the iron from the iron complex, is usually in the range from 1:1 to 2000:1, preferably from 10:1 to 500:1 and in particular in the range from 20:1 to 400:1.

The said catalyst systems can be conveniently supported on organic or inorganic supports, like porous polymer particles or silica.

Conventional molecular weight regulators known in the art, such as chain transfer agents (e.g. hydrogen or $ZnEt_2$), may be used.

The process for producing the copolymer component A) can be carried out using all industrially known polymerization methods at temperatures in the range from -60 to 350°C, preferably from 0 to 200°C and particularly preferably from 25 to 150°C, and under pressures of from 0.5 to 4000 bar, preferably from 1 to 100 bar and particularly preferably from 3 to 40 bar. The polymerization can be carried out in a known manner in bulk, in suspension, in the gas phase or in a supercritical medium in the customary reactors used for the polymerization of olefins. It can be carried out batchwise or preferably continuously in one or more stages. Solution processes, suspension processes, stirred gas-phase processes and gas-phase fluidized-bed processes are all possible.

Preferably the polyolefin composition B) has MIL value from 0.5 to 25 g/10min.,more preferably from 0.8 to 20.0g/10min.; even more preferably from 1.0 to 18.0g/10min., where MIL is the Melt Index L, measured according to ISO 1133-2:2011 at 230°C with a load of 2.16 kg

Preferably, the intrinsic viscosity (I.V.) of the fraction soluble in xylene at 25°C of the polyolefin composition B), measured in tetrahydronaphthalene at 135°C, is of 3.0 dl/g or lower, more preferably of 2.8 dl/g or lower, in particular from 1.5 to 3.0 dl/g or from 1.5 to 2.8 dl/g.

Preferably, component $B^{I}$) of the polyolefin composition B) has a MIL value of from 50 to 200 g/10 min; more preferably from 80 to 170 g/10 min.

The MIL value of components $B^{I}$) + $B^{II}$) blended together is preferably of from 0.1 to 70 g/10 min., more preferably from 1 to 50 g/10 min, in particular from 8 to 40 g/10 min.

As alpha-olefin comonomers which can be present, either individually or in a mixture with one another, in addition to ethylene in component $B^{II}$) of the polyolefin composition B), propylene and butene-1 are preferred.

Butene-1 is particularly preferred.

Preferably component $B^{II}$) has a density of from 0.940 to 0.965 $g/cm^3$.

Specific and particularly preferred amounts by weight of ethylene derived units in component $B^{III}$), referred to the weight of $B^{III}$), are:

- from 40 to 75%, or
- from 45 to 75%, or
- from 48 to 75%, or
- from 40 to 70%, or
- from 45 to 70%, or
- from 48 to 70%.

Preferably, in component $B^{III}$) the ratio $XS^{III}/C_2$, wherein $XS^{III}$ is the amount of fraction soluble in xylene as previously defined and $C_2$ is the above said amount by weight of ethylene derived units referred to the weight of $B^{III}$), is of 2.8 or lower, more preferably of 2.5 or lower, most preferably of 2 or lower, in particular of from 0.8 to 2.8, or 0.8 to 2.5, or 0.8 to 2.

Preferred relative amounts of components $B^{I}$), $B^{II}$) and $B^{III}$), in percent by weight with respect to the total weight of $B^{I}$) + $B^{II}$) + $B^{III}$) are:

- from 10% to 30% of $B^{I}$), from 25% to 45% of $B^{II}$) and from 35% to 55% of $B^{III}$), or

- from 15% to 23% of $B^{I}$), from 30% to 40% of $B^{II}$) and from 40% to 50% of $B^{III}$).

It has been found that the polyolefin composition B) can be prepared by a sequential polymerization, comprising at least three sequential steps, wherein components $B^{I}$), $B^{II}$) and $B^{III}$) are prepared in separate subsequent steps, operating in each step, except the first step, in the presence of the polymer formed and the catalyst used in the preceding step. The catalyst is added only in the first step, however its activity is such that it is still active for all the subsequent steps.
The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.
Reaction time, pressure and temperature relative to the polymerization steps are not critical, however it is best if the temperature is from 50 to 100°C. The pressure can be atmospheric or higher.
The regulation of the molecular weight is carried out by using known regulators, hydrogen in particular.
The said polymerizations are preferably carried out in the presence of a Ziegler-Natta catalyst. Typically, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCh.
Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.
Preferred organometallic compounds are the aluminum alkyl compounds.
Thus, in a preferred embodiment, the polyolefin composition B) is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component 1) contains as electron-donor a compound generally selected among the ethers, ketones, lactones, compounds containing N, P and/or S atoms, and mono- and dicarboxylic acid esters.
Catalysts having the above-mentioned characteristics are well known in the patent literature; particularly advantageous are the catalysts described in US patent 4,399,054 and European patent 45977.
Particularly suited among the said electron-donor compounds are phthalic acid esters, preferably diisobutyl phthalate, and succinic acid esters.
Suitable succinic acid esters are represented by the formula (I):

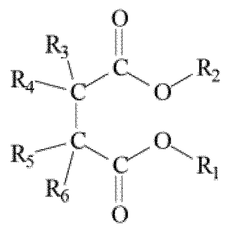

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.
$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.
One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another

preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts 2), one preferably uses the trialkyl aluminum compounds, such as Altriethyl, Al-triisobutyl and Al-tri-n-butyl.

The electron-donor compounds 3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si (OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The polyolefin composition B) can also prepared as a physical blend of the separatelyprepared components rather than as a reactor blend.

The polyethylene composition (I) is obtainable by melting and mixing the components, and the mixing is effected in a mixing apparatus at temperatures generally of from 180 to 310°C, preferably from 190 to 280°C, more preferably from 200 to 250°C.

Any known apparatus and technology can be used for this purpose.

Useful melt-mixing apparatus in this context are in particular extruders or kneaders, and particular preference is given to twin-screw extruders. It is also possible to premix the components at room temperature in a mixing apparatus.

During the preparation of the polyethylene composition (I), besides the main components A) and B) and other optional components, it is possible to introduce additives commonly employed in the art, such as stabilizing agents (against heat, light, U.V.), plasticizers, antiacids, antistatic and water repellant agents, pigments.

Preferably, the present filament or fiber comprises at least 70% by weight of the polyethylene composition (I), more preferably at least 80% by weight, in particular 90% or 95% by weight of polyethylene composition (I), with respect to the total weight of the filament or fiber, the upper limit being 100% in all cases.

The present artificial turf filaments are typically characterized by a rounded (circular, oval, lenticular or even more complex, like multilobal) cross-section, or by an angular, like rectangular, cross-section.

The filaments having rounded cross-section are also called "monofilaments" while those having angular and in particular rectangular cross-section are also called "tapes". Thus the present definition of "filament" comprises the said monofilaments and tapes.

Preferably the tapes have a thickness from 0.03 to 1 mm and width from 2 to 20 mm.

As previously said, the filaments are preferably characterized by a titre of at least 20 den.

Particularly preferred titre values for the filaments are of at least 50 den, especially of at least 100 or 200, in particular of at least 500 den, the upper limit being preferably, in all cases, of 3000 den for monofilaments and of 25000 den for tapes.

As previously mentioned, the filament is preferably stretched by drawing. Particularly preferred are draw ratios from 1.5 to 10 (1:1.5 to 1:10), in particular from 3 to 10 (1:3 to 1:10). These preferred draw ratios apply also to the fibers.

Moreover, as previously mentioned, the filaments can comprise components made of materials different from polyolefins, like embedded reinforcing fibers, made for example of polyamide.

All the said filaments can be used in the form of bundles for preparation of the artificial turf structures. The number of individual filaments in a single bundle is preferably up to 20. Filaments made of different polymer materials, like for instance polypropylene or polyamide, can be present in the bundles.

The bundles can be held together by one or more wrapping filaments, generally of polymer materials, like polypropylene or polyethylene, such wrapping filaments being preferably bonded to one another and/or with the bundled

filaments of the present invention.

Another way of obtaining bundles of filaments is by fibrillation of tapes having relatively large width.

The present polyolefin filaments or fibers can be prepared by means of processes and apparatuses well known in the relevant art.

In general terms, the process for preparing polyolefin filaments comprises the following steps:

(a) melting the polyethylene composition (I) and the other polymer components, when present;
(b) spinning the filaments or extruding a precursor film or tape;
(c) optionally drawing the filaments or the precursor film or tape and/or cutting the precursor film or tape and optionally drawing the so obtained filaments, when no drawing is previously carried out;
(d) optionally finishing the filaments obtained from step (b) or (c).

The melting step (a) and the spinning or extrusion step (b) are generally carried out continuously in sequence by using mono- or twin-screw extruders, equipped with a suited spinning or extrusion head. Thus also the previously described melt-mixing step can be carried out in the same spinning or extrusion apparatus.

The spinning heads comprise a plurality of holes with the same shape as the transversal section of the filament (monofilament or tape).

The film extrusion heads are generally flat or annular dies commonly used for the film preparation.

When a precursor film or tape is obtained in step (b), it is then processed in step (c) by cutting it into tapes having the desired size. When the drawing treatment is carried out on the precursor film or tape, it is consequently no longer required on the final filament.

Examples of finishing treatments can be fibrillation and crimping.

Fibrillation is generally carried out on tapes.

Typically the melting step (a) and the spinning or extrusion step (b) are carried out at the same temperatures as previously defined for the melt-mixing step, namely of from 180 to 310°C, preferably from 190 to 280°C, more preferably from 200 to 250°C.

Typical spinning conditions are:

- temperature in the extruder head from 200 to 300°C;
- take-up speed for primary web (unstretched) from 1 to 50 m/min.

Typical film extrusion conditions are:

- temperature in the extruder head from 200 to 300°C;
- output value from 20 to 1000 kg/hour (on industrial plants).

The filament or the precursor film obtained in step (b) are generally cooled by using for instance one or more chill rolls or by immersion in water at a temperature from 5 to 25°C.

To carry out the drawing treatment, the filament (monofilament or tape) or the precursor tape are previously heated at a temperature from 40 to 120-140°C. Heating can be achieved by using for example a hot air oven, a boiling water bath, heated rolls or by irradiation or other known means.

Drawing can be achieved by delivering the filament or the precursor tape through a series of rolls having different rotation speeds. Preferred ranges of draw ratios so achieved are those previously specified.

Fibrillation can be achieved by feeding the tape between rolls having means for cutting longitudinally and/or diagonally.

Fibers with lower denier than filaments, namely with a titre under 20 den, typically from 1 to 15 den, are prepared by extruding the polymer melt through the already described spinning heads, wherein the holes have a smaller diameter with respect to the diameter used for filaments. The fibers emerging from the spinning head are subsequently subjected to quenching and oriented by stretching in a manner similar to that described above with reference to the orientation of the filaments.

The apparatuses and spinning conditions typically used to prepare fibers are well known in the art.

As previously mentioned, the artificial turf is generally obtained by fixing the filaments or the said bundles of filaments to a substrate, generally called "backing".

Such backing can be for instance a polyolefin (in particular polypropylene) fiber mat.

Filling materials like sand and rubber particles, can be deposited over the backing.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

**Density**

Determined according to ISO 1183 -1:2012 at 23°C.

**Melt Index $MI_2$, $MI_{21}$ and MIL**

Determined according to ISO 1133-2:2011 with the specified temperature and load.

**Intrinsic viscosity I.V.**

The sample was dissolved in tetrahydronaphthalene at 135°C and then was poured into a capillary viscometer. The viscometer tube (Ubbelohde type) was surrounded by a cylindrical glass jacket; this setup allows temperature control with a circulating thermostated liquid. The downward passage of the meniscus was timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution was used to determine I.V.

**Molecular Weight Distribution Determination**

The determination of the molar mass distributions and the means Mn, Mw, Mz and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500$\mu$l and polymer concentration was in the range of 0.01% < cone. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE=}$0.725, valid in TCB at 135°C. Data recording, calibration and calculation was carried out using NTGPC_Control_V6.02.03 and NTGPC V6.4.24 (hs GmbH, Hauptstraße 36, D-55437 Ober-Hilbersheim, Germany) respectively.

**Comonomer content**

The comonomer content was determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the massbalance of the polymerization process and was found to be in agreement.

**Tenacity and Elongation at break of filaments**

Each filament to be tested was fixed to the clamps of an Instron dinamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation

at break were determined.

The tenacity is derived using the following equation:

$$\text{Tenacity} = \text{Ultimate strength (cN)} \times 10/\text{Titre (den)}.$$

**Elastic recovery of filaments:**

Elastic recovery was measured with a dynamometer at 23°C.

Two deformations cycles were applied to the samples under the following conditions:

First cycle

- Initial Cross head distance 200 mm,
- cross head speed 3.3 mm/s,
- maximum cross head distance at maximum deformation 400 mm
- relaxation time at maximum cross head distance 60 seconds
- reverse cross head speed 3.3 mm/second
- cross head time at the end of the deformation cycle (cross head distance 200 mm) 180 seconds.

Second cycle - carried out three minutes after the end of the firs cycle

- Initial Cross head distance 200 mm,
- cross head speed 3.3 mm/s.

Third to fifth cycles

Carried out under the same conditions as for the second cycle, with three minutes intervals after the second and subsequent ones.

Percent of residual deformation: it is the percentage value of the deformation recorded when the load cell starts to record a tensional force in the second cycle corresponding to the formula Percent of residual deformation = 100x (current crosshead distance - initial crosshead distance)/(initial crosshead distance).

- end of test

Elastic recovery (%) is the percentage value of the maximum deformation (400 mm, corresponding to 100% deformation with respect to the initial cross head distance of 200 mm) minus the percent of residual deformation as above defined.

**Xylene-soluble faction at 25°C (XS)**

The Xylene Soluble fraction was measured according to ISO 16152, 2005, but with the following deviations (between brakets what prescribed by the ISO 16152)

The solution volume is 250 ml (200 ml);

During the precipitation stage at 25°C for 30 min, the solution, for the final 10 minutes, is kept under agitation by a magnetic stirrer (30 min, without any stirring at all);

The final drying step is done under vacuum at 70°C (100 °C);

The content of said xylene-soluble fraction is expressed as a percentage of the original 2.5 grams and then, by difference (complementary to 100), the xylene unsoluble %;

XS of components $B^{II}$) and $B^{III}$) have been calculated by using the formula;

$$XS_{tot}=W_B{}^{I}XS^{I}+W_B{}^{II}XS^{II}+W_B{}^{III}XS^{III}$$

wherein $W_B^I$, $W_B^{II}$ and $W_B^{III}$ are the relative amount of components $B^I$), $B^{II}$) and $B^{III}$) ($B^I+B^{II}+B^{III}=1$)

**Examples 1 and 2**

The following materials are used to prepare the polyethylene composition (I).

Copolymer component A)

Ethylene copolymer prepared as in Example 4 of WO2009103516, having the properties reported in Table I below.

Table I

| | |
|---|---|
| Density [g/cm$^3$] | 0.936 |
| Mw [g/mol] | 96000 |
| Mw/Mn | 9 |
| Mz [g/mol] | 281000 |
| GPC % at molar mass 1Mio | - |
| $C_6$- content [% by weight] | 5.5 |
| $MI_2$ [g/10min.] | 2.5 |
| $MI_{21}$ [g/10min.] | 85 |
| Note: $C_{6-}$ = hexene-1 | |

Polyolefin composition B)

Polyolefin composition prepared by sequential polymerization as hereinafter described.

Solid catalyst component

The solid catalyst component used in polymerization is a Ziegler-Natta catalyst component supported on magnesium chloride, containing titanium and diisobutylphthalate as internal donor, prepared as follows. An initial amount of microspheroidal $MgCl_2 \cdot 2.8C_2H_5OH$ was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of $TiCl_4$ were introduced at 0°C. While stirring, 30 grams of the microspheroidal $MgCl_2 \cdot 1.16C_2H_5OH$ adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with $TiCl_4$ was repeated at 100°C for 1 hour in the presence of an amount of diisobutylphthalate such as to have a Mg/ diisobutylphthalate molar ratio of 27. After that time the stirring was stopped, the liquid siphoned off and the treatment with $TiCl_4$ was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above was contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.

The catalyst system was then subjected to prepolymerization by maintaining it in suspension in liquid propylene at 50 °C for about 75 minutes before introducing it into the first polymerization reactor.

Polymerization

The polymerization was carried out in continuous in a series of three gas-phase reactors equipped with devices to transfer the product from the first reactor to the subsequent ones. Into the first gas phase polymerization reactor a propylene-based polymer, corresponding to component $B^{I}$), was produced by feeding in a continuous and constant flow the prepolymerized catalyst system, hydrogen (used as molecular weight regulator) and propylene all in the gas state. The propylene-based polymer coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene, corresponding to component $B^{II}$), was produced. The product coming from the second reactor was discharged in a continuous flow and, after having been purged of unreacted monomers, was introduced, in a continuous flow, into the third gas phase reactor, together with quantitatively constant flows of hydrogen, ethylene and propylene all in the gas state. In the third reactor an ethylene-propylene polymer, corresponding to component $B^{III}$), was produced. Polymerization conditions, molar ratio of the reactants and composition and properties of the copolymers obtained are shown in Table II. The polymer particles exiting the third reactor were subjected to a steam treatment to remove the reactive monomers and volatile substances, and then dried. Thereafter the polymer particles were mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition was made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 1 68 is tris(2,4-di-tert.-butylphenyl)phosphite. The characteristics relating to the polymer composition, are reported in Table II.

Table II

| Example | | 1 |
|---|---|---|
| 1st Reactor - component $B^{I}$) | | |
| Temperature | °C | 60 |
| Pressure | barg | 16 |
| $H_2/C_3$- | mol. | 0.24 |
| Split | wt% | 22 |
| Xylene soluble of $B^{I}$) ($XS^{I}$) | wt% | 4.2 |
| MIL of $B^{I}$) | g/10 min. | 110 |
| 2nd Reactor - component $B^{II}$) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |

(continued)

| | | |
|---|---|---|
| 2nd Reactor - component $B^{II}$) | | |
| Split | wt% | 32 |
| $C_2$- content of $B^{II}$) * | wt% | 90 |
| $C_4$- content of $B^{II}$) * | wt% | 10 |
| Xylene soluble of $B^{II}$) ($XS^{II}$) * | wt% | 16.0 |
| Xylene soluble of $B^{I}$) +$B^{II}$) | wt% | 12.0 |
| MIL of $B^{I}$) +$B^{II}$) | g/10 min. | 35.9 |
| 3rd Reactor - component $B^{III}$) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of $B^{III}$) * | wt% | 52 |
| Xylene soluble of $B^{III}$) ($XS^{III}$)* | wt% | 83 |
| Total Composition - Component B) | | |
| MIL | g/10 min | 1.61 |
| IV on soluble in Xylene | dl/g | 2.4 |
| Note; $C_{2-}$ = ethylene; $C_3$- = propylene; $C_4$- = 1-butene (IR); split = amount of polymer produced in the concerned reactor. * Calculated values | | |

Component A) and the polyolefin composition B) were blended together using the same extrusion apparatus and conditions as reported above for the polyolefin composition B), so to obtain the polyethylene composition (I).

The so obtained polyethylene composition (I) was spun into filaments with lenticular cross-section.

The apparatus used was an extruder Leonard, 25 mm diameter, 27 LID long + Gear pump. The die had 8 holes, lenticular shaped, approx. 8.0 mm x 1.2 mm.

The main process conditions were:

| | |
|---|---|
| Temperature profile: | Cylinder 180-185-190-195 °C; |
| | - Pump 200 °C |
| | - Adapter 205 °C |
| | - Head-die 210°C |
| Melt temperature: | 212+/- 3 °C; |
| Output used: | around 4 kg/h; |
| Cooling water bath: | 21+/-1 °C; |
| Stretching oven set: | 106+/-2 °C (hot air); |
| Stretching ratio used: | 1:4; |
| Annealing oven set: | 106+/-2°C (hot air); |
| Annealing factor: | average -5.0 % (slower). |

## Comparison Examples 1-3

Carried out as in Example 1, except that in Comparison Example 1 component A) alone was subjected to spinning and testing, in the absence of component B), while in Comparison Example 2 the previously described component B) was replaced with a polyolefin composition C) comprising:

- 31% by weight of a crystalline propylene/ethylene copolymer, having an ethylene content of 3.3% by weight and solubility in xylene at room temperature of 5.5% by weight, and
- 69% by weight of a propylene/ethylene elastomeric copolymer, having an ethylene content of 27% by weight, solubility in xylene at room temperature of 90.3% by weight.

Said polyolefin composition was obtained as a reactor grade, in subsequent stages carried out in gas phase, using a Ziegler-Natta catalyst of the same kind as previously described and had a an I.V. of the fraction soluble in xylene at 25°C of 3.20 dl/g.

The properties of the so obtained filaments are reported, for all the examples, in Table III.

Table III

| **Example No.** | **1** | **2** | **Com.1** | **Comp.2** | **Comp.3** |
|---|---|---|---|---|---|
| Amount of A) [% by weight] | 90 | 80 | 100 | 90 | 80 |
| Amount of B) [% by weight] | 10 | 20 | 0 | 0 | 0 |
| Amount of C) [% by weight] | 0 | 0 | 0 | 10 | 20 |
| Titre [den.] | 2050 | 2055 | 2030 | 2060 | 1925 |
| Tenacity [g/den] | 1.48 | 1.44 | 1.47 | 1.45 | 2.56 |
| Elongation at Break [%] | 155 | 140 | 155 | 145 | 105 |
| Elastic Recovery [%] | 68.1 | 62.4 | 61.2 | 61.9 | 45 |

## Claims

**1.** A polyethylene composition comprising:

A) from 75% to 97% by weight of a copolymer of ethylene with one or more comonomers selected from $C_3$-$C_{10}$ alpha-olefins, said copolymer having the following features:

1) a density of 0.925 g/cm$^3$ or higher, measured according to ISO 1183-1:2012 at 23°C;
2) a $MI_2$ value of 0.5 g/10 min. or greater, where $MI_2$ is the Melt Index measured according to ISO 1133-2:2011 at 190°C with a load of 2.16 kg;

B) from 3% to 25% by weight of a polyolefin composition comprising:

$B^I$) from 5% to 35% by weight of one or more propylene homopolymer(s) or one or more copolymer(s) of propylene with ethylene and/or $C_4$-$C_8$ $\alpha$-olefin(s), containing 90% or more of propylene units, or combinations of said homopolymers and copolymers; component $B^I$) containing 10.0% by weight or less of a fraction soluble in xylene at 25°C ($XS^I$), both the amount of propylene units and of the fraction $XS^I$ being referred to the weight of $B^I$);
$B^{II}$) from 20% to 50% by weight of a copolymer of ethylene and a one or more comonomers selected from $C_3$-$C_{10}$ alpha-olefins, containing from 1.0% to 20.0% by weight of alpha-olefin units and containing 25.0% by weight or less of a fraction soluble in xylene at 25°C ($XS^{II}$), both the amount of alpha-olefin units and of the fraction $XS^{II}$ being referred to the weight of $B^{II}$); and
$B^{III}$) from 30% to 60% by weight of a copolymer of ethylene and propylene containing from 25.0% to 75.0 % by weight of ethylene derived units and containing from 40.0% to 95.0%by weight of a fraction soluble in xylene at 25°C ($XS^{III}$), both the amount of ethylene units and of the fraction $XS^{III}$ being referred to the weight of $B^{III}$);

the said amounts of A) and B) being referred to the total weight of A) + B) and the said amounts of $B^I$), $B^{II}$) and $B^{III}$) being referred to the total weight of $B^I$) + $B^{II}$) + $B^{III}$).

**2.** The polyolefin composition of claim 1, wherein component A) is a copolymer of ethylene with hexene-1.

**3.** The polyolefin composition of claim 1 or 2, wherein component A) has $MI_2$ value of from 0.5 to 5 g/10 min.

**4.** The polyolefin composition of claim 1 or 2, wherein component A) has a $MI_{21}/MI_2$ value of from 25 to 60.

**5.** The polyolefin composition of claim 1 or 2, wherein component A) has a Mw/Mn value of from 4 to 18, where Mw and Mn are the weight average molecular weight and the number average molecular weight respectively, measured by GPC.

**6.** The polyolefin composition of claim 1 or 2, wherein component A) has a z-average molar mass Mz of less than 1000000 g/mol, measured by GPC.

**7.** The polyolefin composition of claim 1 or 2, wherein the intrinsic viscosity (I.V.) of the fraction soluble in xylene at 25°C of the polyolefin composition B), measured in tetrahydronaphthalene at 135°C, is of 3.0 dl/g or lower.

**8.** The polyolefin composition of claim 1 or 2, wherein component $B^I$) has a MIL value of from 50 to 200 g/10 min.

**9.** The polyolefin composition of claim 1 or 2, wherein component $B^{II}$) is a copolymer of ethylene with butene-1.

**10.** The polyolefin composition of claim 1 or 2, wherein in component $B^{III}$) the ratio $XS^{III}/C_2$, wherein $C_2$ is the amount by weight of ethylene units referred to the weight of $B^{III}$), is of 2.8 or lower.

**11.** A filament or fiber, comprising the polyethylene composition of claim 1.

**12.** The filament or fiber of claim 11, stretched by drawing with a draw ratio from 1.5 to 10.

**13.** A filament according to claim 11 or 12, having a titre of at least 20 den.

**14.** Manufactured items containing filaments according to claims 11 to 13.

**15.** The manufactured items according to claim 14, in form of artificial turf.

**Patentansprüche**

**1.** Polyethylenzusammensetzung, umfassend:

A) 75 Gew.% bis 97 Gew.% eines Copolymers von Ethylen mit einem oder mehreren Comonomeren ausgewählt aus $C_3$-$C_{10}$-alpha-Olefinen, wobei das Copolymer die folgenden Merkmale aufweist:

1) eine Dichte von 0,925 g/$cm^3$ oder höher, gemessen gemäß ISO 1183-1:2012 bei 23 °C;
2) einen $MI_2$-Wert von 0,5 g/10 min. oder größer, wobei $MI_2$ der gemäß ISO 1133-2:2011 bei 190 °C unter einer Last von 2,16 kg gemessene Schmelzindex ist;

B) 3 Gew.% bis 25 Gew.% einer Polyolefinzusammensetzung, umfassend:

$B^I$) 5 Gew.% bis 35 Gew.% von einem oder mehreren Propylenhomopoly-mer(en) oder einem oder mehreren Copolymer(en) von Propylen mit Ethylen und/oder $C_4$-$C_8$-$\alpha$-Olefin(en), das/die 90 % oder mehr Propyleneinheiten enthält/enthalten, oder Kombinationen von den Homopolymeren und Copolymeren; wobei Komponente $B^I$) 10,0 Gew.% oder weniger von einer in Xylol bei 25 °C löslichen Fraktion ($XS^I$) enthält, wobei sich sowohl die Menge der Propyleneinheiten als auch diejenige der Fraktion $XS^I$ auf das Gewicht von $B^I$) beziehen;
$B^{II}$) 20 Gew.% bis 50 Gew.% eines Copolymers von Ethylen und einem oder mehreren Comonomeren ausgewählt aus $C_3$-$C_{10}$-alpha-Olefinen, das 1,0 Gew.% bis 20,0 Gew.% alpha-Olefineinheiten enthält und 25,0 Gew.% oder weniger von einer in Xylol bei 25 °C löslichen Fraktion ($XS^{II}$) enthält, wobei sich sowohl die Menge der alpha-Olefineinheiten als auch diejenige der Fraktion $XS^{II}$ auf das Gewicht von $B^{II}$) beziehen; und
$B^{III}$) 30 Gew.% bis 60 Gew.% eines Copolymers von Ethylen und Propylen, das 25,0 Gew.% bis 75,0 Gew.% von Ethylen abgeleitete Einheiten enthält und 40,0 Gew.% bis 95,0 Gew.% von einer in Xylol bei 25 °C

löslichen Fraktion ($XS^{III}$) enthält, wobei sich sowohl die Menge der Ethyleneinheiten als auch diejenige der Fraktion $XS^{III}$ auf das Gewicht von $B^{III}$) beziehen;

wobei die Mengen von A) und B) sich auf das Gesamtgewicht von A) + B) beziehen, und die Mengen von $B^{I}$), $B^{II}$) und $B^{III}$) sich auf das Gesamtgewicht von $B^{I}$) + $B^{II}$) + $B^{III}$) beziehen.

**2.** Polyolefinzusammensetzung nach Anspruch 1, wobei Komponente A) ein Copolymer von Ethylen mit Hexen-1 ist.

**3.** Polyolefinzusammensetzung nach Anspruch 1 oder 2, wobei Komponente A) einen $MI_2$-Wert von 0,5 bis 5 g/10 min hat.

**4.** Polyolefinzusammensetzung nach Anspruch 1 oder 2, wobei Komponente A) einen $MI_{21}/MI_2$-Wert von 25 bis 60 hat.

**5.** Polyolefinzusammensetzung nach Anspruch 1 oder 2, wobei Komponente A) einen Mw/Mn-Wert von 4 bis 18 hat, wobei Mw und Mn das durchschnittliche Molekulargewicht (Gewichtsmittel) beziehungsweise das durchschnittliche Molekulargewicht (Zahlenmittel) sind, gemessen mittels GPC.

**6.** Polyolefinzusammensetzung nach Anspruch 1 oder 2, wobei Komponente A) eine Molmasse (z-Mittel) Mz von weniger als 1000000 g/mol hat, gemessen mittels GPC.

**7.** Polyolefinzusammensetzung nach Anspruch 1 oder 2, wobei die Grenzviskosität (I.V.) der in Xylol bei 25 °C löslichen Fraktion der Polyolefinzusammensetzung B), gemessen in Tetrahydronaphthalin bei 135 °C, 3,0 dl/g oder weniger beträgt.

**8.** Polyolefinzusammensetzung nach Anspruch 1 oder 2, wobei Komponente $B^{I}$) einen MIL-Wert von 50 bis 200 g/10 min hat.

**9.** Polyolefinzusammensetzung nach Anspruch 1 oder 2, wobei Komponente $B^{II}$) ein Copolymer von Ethylen mit Buten-1 ist.

**10.** Polyolefinzusammensetzung nach Anspruch 1 oder 2, wobei in Komponente $B^{III}$) das Verhältnis $XS^{III}/C_2$, wobei $C_2$ die gewichtsbezogene Menge der Ethyleneinheiten ist, bezogen auf das Gewicht von $B^{III}$), 2,8 oder niedriger ist.

**11.** Filament oder Faser, umfassend die Polyethylenzusammensetzung nach Anspruch 1.

**12.** Filament oder Faser nach Anspruch 11, die durch Ziehen mit einem Ziehverhältnis von 1,5 bis 10 gereckt worden ist.

**13.** Filament nach Anspruch 11 oder 12 mit einem Titer von mindestens 20 den.

**14.** Fertigungsartikel, die Filamente gemäß den Ansprüchen 11 bis 13 enthalten.

**15.** Fertigungsartikel nach Anspruch 14 in Form von künstlichem Rasen.

## Revendications

**1.** Composition de polyéthylène comprenant :

A) 75 % à 97 % en poids d'un copolymère d'éthylène avec un ou plusieurs comonomères choisis parmi les alpha-oléfines en $C_3$-$C_{10}$, ledit copolymère présentant les caractéristiques suivantes :

1) une densité de 0,925 $g/cm^3$ ou plus, mesurée selon la norme ISO 1183-1:2012 à 23 °C ;
2) une valeur de $MI_2$ de 0,5 g/10 min. ou plus, où $MI_2$ représente l'indice de fluidité à chaud mesuré selon la norme ISO 1133-2:2011 à 190 °C sous une charge de 2,16 kg ;

B) 3 % à 25 % en poids d'une composition polyoléfinique comprenant :

$B^{I}$) 5 % à 35 % en poids d'un ou de plusieurs homopolymère(s) de propylène ou d'un ou de plusieurs

copolymère(s) de propylène avec de l'éthylène et/ou une/des $\alpha$-oléfine(s) en $C_4$-$C_8$, contenant 90 % ou plus de motifs de propylène, ou des combinaisons desdits homopolymères et copolymères ; le constituant $B^I$) contenant 10,0% en poids ou moins d'une fraction soluble dans le xylène à 25 °C ($XS^I$), à la fois la quantité de motifs de propylène et de la fraction $XS^I$ se rapportant au poids de $B^I$) ;

$B^{II}$) 20 % à 50 % en poids d'un copolymère d'éthylène et d'un ou de plusieurs comonomères choisis parmi les alpha-oléfines en $C_3$-$C_{10}$, contenant 1,0% à 20,0% en poids de motifs d'alpha-oléfine et contenant 25,0% en poids ou moins d'une fraction soluble dans le xylène à 25 °C ($XS^{II}$), à la fois la quantité de motifs d'alpha-oléfine et de la fraction $XS^{II}$ se rapportant au poids de $B^{II}$) ; et

$B^{III}$) 30 % à 60 % en poids d'un copolymère d'éthylène et de propylène contenant 25,0% à 75,0% en poids de motifs dérivés d'éthylène et contenant 40,0% à 95,0% en poids d'une fraction soluble dans le xylène à 25 °C ($XS^{III}$), à la fois la quantité de motifs d'éthylène et de la fraction $XS^{III}$ se rapportant au poids de $B^{III}$) ;

lesdites quantités de A) et B) se rapportant au poids total de A) + B) et lesdites quantités de $B^I$), $B^{II}$) et $B^{III}$) se rapportant au poids total de $B^I$) + $B^{II}$) + $B^{III}$).

**2.** Composition polyoléfinique selon la revendication 1, le constituant A) étant un copolymère d'éthylène avec de l'hexène-1.

**3.** Composition polyoléfinique selon la revendication 1 ou 2, le constituant A) présentant une valeur de $MI_2$ de 0,5 à 5 g/10 min.

**4.** Composition polyoléfinique selon la revendication 1 ou 2, le constituant A) présentant une valeur de $MI_{21}/MI_2$ de 25 à 60.

**5.** Composition polyoléfinique selon la revendication 1 ou 2, le constituant A) présentant une valeur de Mw/Mn de 4 à 18, où Mw et Mn représentent respectivement le poids moléculaire moyen en poids et le poids moléculaire moyen en nombre, mesurés par CPG.

**6.** Composition polyoléfinique selon la revendication 1 ou 2, le constituant A) présentant une masse molaire moyenne z Mz inférieure à 1.000.000 g/mole, mesurée par CPG.

**7.** Composition polyoléfinique selon la revendication 1 ou 2, la viscosité intrinsèque (I.V.) de la fraction soluble dans le xylène à 25 °C de la composition polyoléfinique B), mesurée dans du tétrahydronaphtalène à 135 °C, étant de 3,0 dl/g ou moins.

**8.** Composition polyoléfinique selon la revendication 1 ou 2, le constituant $B^I$) présentant une valeur de MIL de 50 à 200 g/10 min.

**9.** Composition polyoléfinique selon la revendication 1 ou 2, le constituant $B^{II}$) étant un copolymère d'éthylène avec du butène-1.

**10.** Composition polyoléfinique selon la revendication 1 ou 2, où, dans le constituant $B^{III}$), le rapport $XS^{III}/C_2$, $C_2$ étant la quantité en poids de motifs d'éthylène se rapportant au poids de $B^{III}$), vaut 2,8 ou moins.

**11.** Filament ou fibre, comprenant la composition de polyéthylène selon la revendication 1.

**12.** Filament ou fibre selon la revendication 11, étiré par étirage avec un rapport d'étirage de 1,5 à 10.

**13.** Filament selon la revendication 11 ou 12, présentant un titre d'au moins 20 den.

**14.** Articles fabriqués contenant des filaments selon les revendications 11 à 13.

**15.** Articles fabriqués selon la revendication 14, sous forme de gazon artificiel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005005730 A
- WO 2009101124 A
- WO 2011134897 A
- WO 2009103516 A
- EP 129368 A
- EP 561479 A
- EP 545304 A
- EP 576970 A
- EP 416815 A
- EP 632063 A
- EP 659758 A
- EP 661300 A
- WO 0031090 A
- US 4399054 A
- EP 45977 A
- EP 361493 A
- WO 728769 A


### Non-patent literature cited in the description


- Chromatography of Polymers. ACS Series. 1993, vol. 521
- **SIMON PANG ; ALFRED RUDIN.** Size-Exclusion Chromatographic Assessment of Long-Chain Branch Frequency. *Polyethylenes,* 254-269
- **HUGGINS, M.L.** *J. Am. Chem. Soc.,* 1942, vol. 64, 2716
- **BENOIT H. ; REMPP P. ; GRUBISIC Z.** J. Polymer Sci. 1967, vol. 5, 753